# EUROPEAN PATENT APPLICATION

(11) **EP 2 573 468 A2**
(43) Date of publication of application: **27.03.2013**
(21) Application number: 12184176.1
(22) Date of filing: 13.09.2012
(51) Int. Cl.: F23R 3/28, F23L 7/00, F23N 5/00

(54) **System for injecting fuel in a gas turbine engine**

(30) Priority: 22.09.2011 US 201113240165
(71) Applicant: General Electric Company, Schenectady, NY 12345 (US)
(72) Inventor: Baruah, Abinash, 560066 Bangalore, Karnataka (IN); Desai, Anand Prafulchandra, 560066 Banagalore, Karnataka (IN); Dhanasekaran, Thangaraj, 560066 Banagalore, Karnataka (IN); Popovic, Predrag, Greenville, SC 29615 (US)
(74) Representative: Cleary, Fidelma

(57) **Abstract**

A system including a controller (82). The controller (82) receives a signal indicative of an emissions level of a turbine (18). The controller generates at least one control signal. This control signal controls a split of diluent between a first and a second mixing chamber, whereby the first and the second mixing chambers are located in a fuel nozzle (12) in the turbine (18).

## Description

### BACKGROUND OF THE INVENTION

The subject matter disclosed herein relates generally to turbine engines and, more specifically, to introduction of diluent into a combustor of the turbine engine.

A gas turbine engine combusts a mixture of fuel and air to generate hot combustion gases, which in turn drive one or more turbines. In particular, the hot combustion gases force turbine blades to rotate, thereby driving a shaft to rotate one or more loads, e.g., electrical generator. The generation of these combustion gases occurs in a combustor, which may include one or more fuel nozzles that introduce a fuel or a mixture of fuel and air into a combustion chamber for ignition. In addition, it may be helpful to introduce a diluent, for example, nitrogen or steam, to the combustor to reduce Nitrogen Oxides (NOx) emissions, Carbon Monoxide (CO) emissions, or other types of emissions generated during the combustion process in the combustion chamber. Unfortunately, existing systems may not adequately mix the diluent with fuel and/or air, thereby reducing the effectiveness of the diluent.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a system including a fuel nozzle, including a first mixing chamber comprising at least one first opening, a second mixing chamber comprising at least one second opening, a first path configured to supply a first fluid into the first mixing chamber, a second path configured to supply a second fluid into the first mixing chamber via the at least one first opening, a third path configured to supply a mixture of the first fluid and the second fluid from the first mixing chamber to the second mixing chamber via the at least one second opening, and a fourth path configured to supply the second fluid to the second mixing chamber.

In a second aspect, the invention resides in a system including a controller configured to receive a signal indicative of an emissions level of a turbine, and generate at least one control signal configured control a split of diluent between a first and a second mixing chamber of a fuel nozzle in the turbine.

In a third aspect, the invention resides in a system including a fuel nozzle including a first mixing chamber configured to receive a fuel, a diluent, and a fluid mixture comprising diluent, a fuel passage fluidly coupled to the first mixing chamber, wherein the fuel passage is configured to supply the fuel to the first mixing chamber, a second mixing chamber fluidly coupled to the first mixing chamber, wherein the second mixing chamber is configured to receive the fluid mixture from the first mixing chamber, and a plenum fluidly coupled to both the first mixing chamber and the second mixing chamber, wherein the plenum is configured to split the diluent into a first diluent flow into the first mixing chamber and a second diluent flow into the second mixing chamber.

### BRIEF DESCRIPTION OF THE DRAWINGS

Embodiments of the present invention will now be described, by way of example only, with reference to the accompanying drawings in which:
FIG. 1 is a block diagram of a turbine system having a fuel nozzle coupled to a combustor in accordance with an embodiment of the present technique;
FIG. 2 is a cross-sectional side view of an embodiment of the turbine system, as illustrated in FIG. 1;
FIG. 3 is a cross sectional side view of an embodiment of a fuel nozzle, as illustrated in FIG. 2;
FIG. 4 is a cross-sectional side view of an embodiment of a fuel nozzle, as illustrated in FIG. 2; and
FIG. 5 is a block diagram of a turbine system having a controller for use in conjunction with the turbine, in accordance with an embodiment of the present technique.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed below, certain embodiments of a turbine system include fuel nozzles that receive diluent to reduce emissions in the turbine system. To allow for better mixing, and, thus, better emission control, the fuel nozzles may include more than one mixing chamber for mixing a diluent with fuel, air, or a fuel-air mixture. For example, a premixing chamber may be included in the fuel nozzle such that a pre-mixed diluent and fuel or fuel air mixture may be transmitted for mixture with a fuel flow.

In one embodiment, the amount of diluent transmitted to the pre-mixing chamber may be controlled via the geometry of the fuel nozzle. For example, openings of a certain size, shape, and/or number may be utilized when the fuel nozzles are produced. These openings may allow for a certain amount of diluent to enter the pre-mixing chamber of the fuel nozzle.

In another embodiment, a stopper may be utilized to seal an opening between a diluent path and the pre-mixing chamber. This stopper may be movable and may move away from the opening as force from the diluent in the diluent path is applied to the stopper. Thus, by controlling the pressure and/or amount of diluent provided to the fuel nozzles, the distance moved by the movable stopper (and, thus, the amount of the diluent transmitted to the pre-mixing chamber) may be controlled. Additionally, a check valve may be utilized in place of the stopper.

Additionally, a controller may be utilized to control the amount, pressure, or another attribute of the diluent as desired. For example, a controller may receive signals from one or more sensors that indicate current emission levels or other attributes of the turbine system. These signals may be utilized by the controller to determine what control signals are to be transmitted to control, for example, a fuel source or a diluent source for the turbine.

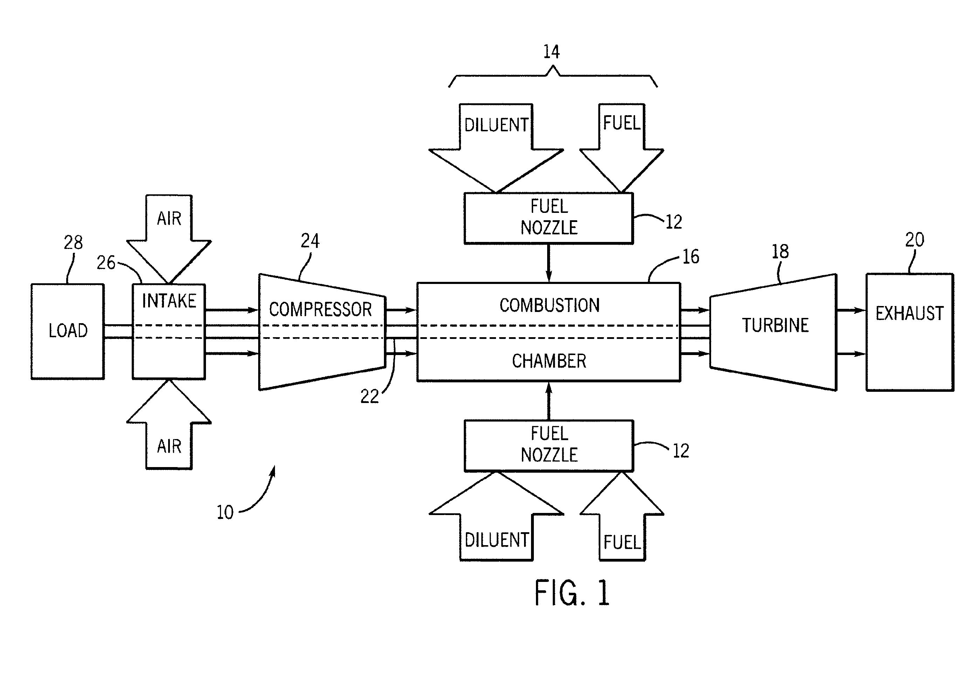

Turning now to the drawings and referring first to FIG. 1, an embodiment of a turbine system 10 may include one or more fuel nozzles 12. Although the fuel nozzles 12 are illustrated as simple blocks, each illustrated fuel nozzle 12 may include multiple fuel nozzles integrated together in a group and/or a standalone fuel nozzle, wherein each illustrated fuel nozzle 12 may be able to integrate diluent into a fuel stream and/or into a fuel air mixture prior to combustion.

The turbine system 10 may use liquid or gas fuel, such as natural gas and/or a hydrogen rich synthetic gas, to run the turbine system 10. As depicted, a plurality of fuel nozzles 12 may intake a fuel supply, mix the fuel with air, and distribute the air-fuel mixture into a combustion chamber 16, whereby the fuel nozzles 12 and combustion chamber 16 may be elements of a combustor 14. It should be noted that diluent may also be added to the air-fuel mixture depending on, for example, emission requirements or other characteristics of the turbine system 10. The air-fuel mixture (with or without diluent present) combusts in the chamber 16 within combustor 14, thereby creating hot pressurized exhaust gases. The combustion chamber 16 directs the exhaust gases through a turbine 18 toward an exhaust outlet 20. As the exhaust gases pass through the turbine 18, the gases force one or more turbine blades to rotate a shaft 22 along an axis of the system 10. As illustrated, the shaft 22 may be connected to various components of the turbine system 10, including a compressor 24. The compressor 24 also includes blades that may be coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 may also be connected to a load 28, which may be a vehicle or a stationary load, such as an electrical generator in a power plant or a propeller on an aircraft, for example. As will be understood, the load 28 may include any suitable device capable of being powered by the rotational output of turbine system 10.

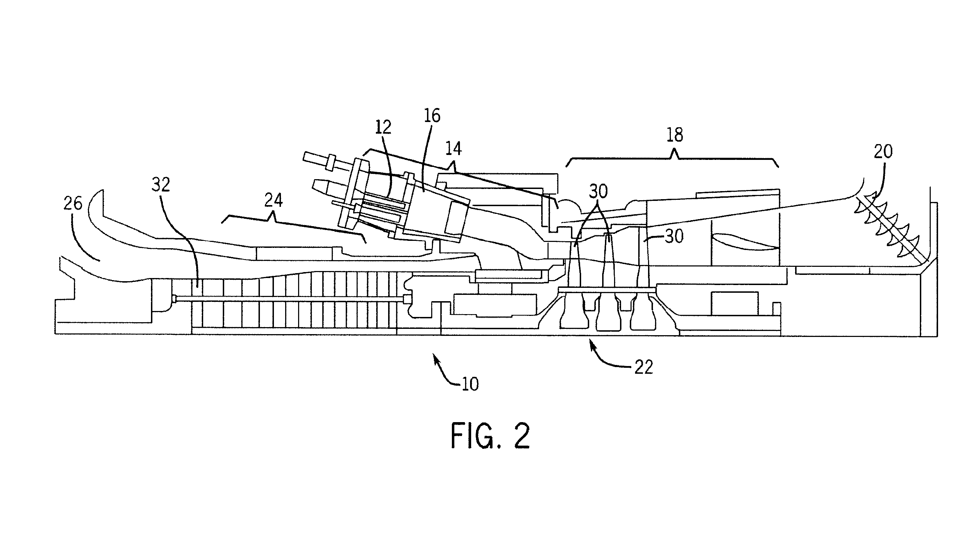

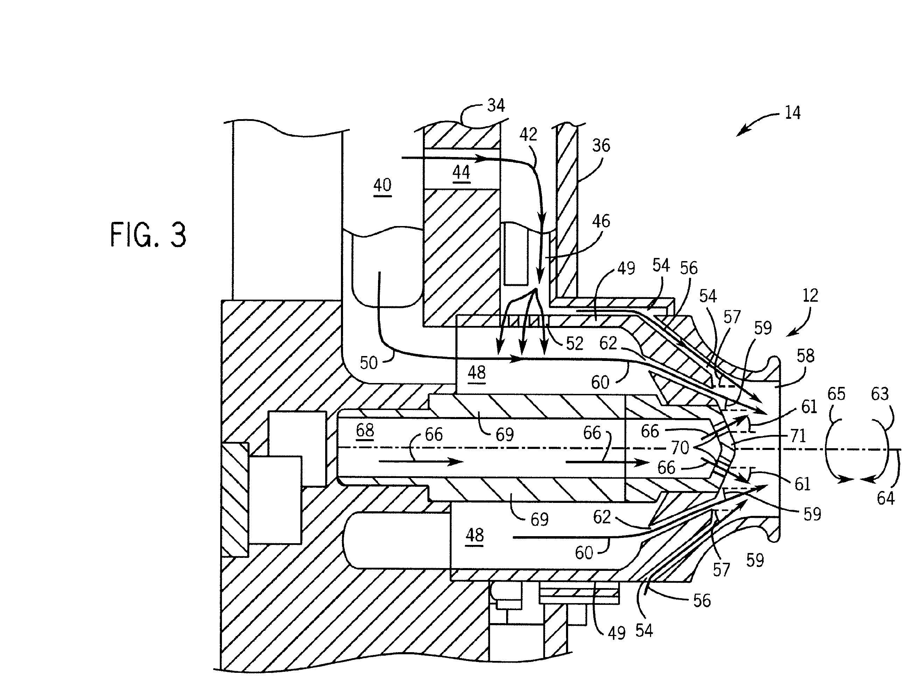

FIG. 2 illustrates a cross-sectional side view of an embodiment of the turbine system 10 schematically depicted in FIG. 1. The turbine system 10 includes one or more fuel nozzles 12 located inside one or more combustors 14, whereby the fuel nozzles may supply diluent along one or more paths to premix with fuel and/or air. In operation, air enters the gas turbine system 10 through the air intake 26 and is pressurized in the compressor 24. The compressed air may then be mixed with fuel for combustion within the combustor 14. For example, the fuel nozzles 12 may inject an fuel-air mixture into the combustion chamber 16 in a suitable ratio for optimal combustion, emissions, fuel consumption, and power output. Additionally, as will be further described in relation to FIG. 3, the fuel nozzles 12 may inject diluent to be pre-mixed with the fuel and air in each nozzle 12. The combustion of the mixture (inclusive of, for example, fuel, air, and diluent) generates hot pressurized exhaust gases, which then drive one or more blades 30 within the turbine 18 to rotate the shaft 22 and, thus, the compressor 24 and the load 28. For example, the rotation of the turbine blades 30 causes a rotation of the shaft 22, thereby causing blades 32 within the compressor 24 to draw in and pressurize air received from the air intake 26. Moreover, it should be noted that the gas turbine system 10 may be configured to work with suitable working fluids other than air, such as blends of carbon dioxide and oxygen.

FIG. 3 is a cross-sectional side view of a portion of the combustor 14 having one or more fuel nozzles 12. The combustor 14 may include a cover ring 34 and a baffle plate 36. Additionally, a diluent 40 may pass along a fluid flow path 42 through an opening 44 in the cover ring 34 and into a radial plenum 46 defined by the cover ring 34 and the baffle plate 36. In one embodiment, the diluent 40 may be steam, nitrogen, or other fluids. Thus, fluid flow path 42 may operate to supply a fluid (e.g., diluent 40) to the plenum 46, which as will be discussed below in greater detail, so that the fluid (i.e., diluent 40) may be pre-mixed with a combustible fluid to alter emissions generated by combustion of the combustible fluid.

Each fuel nozzle 12 may also include a mixing chamber 48 that may be supplied with a fluid flow 50. Fluid flow 50 may include fuel to be combusted, air, or a fuel-air mixture. In one embodiment, fluid flow 50 may mix with diluent 40 in the mixing chamber 48, which may, for example, be annularly positioned within the nozzle 12. That is, the mixing chamber 48 may be defined by, for example, an annular wall 49 that separates the mixing chamber 48 from the plenum 46. In one embodiment, the diluent 40 may pass through one or more holes 52 in the annular wall 49 that may be located between the plenum 46 and mixing chamber 48. Thus, the holes 52 may be radial holes in the annular wall 49. These holes may vary in size, shape and number as required to passively control diluent 40 flow into the mixing chamber 48. These holes 52 may, for example, allow for approximately 1%, 2%, 3%, 4%, 5%, 6%, 7%, 8%, 9%, 10%, or more of the total amount of diluent 40 along flow path 42 to be transmitted into mixing chamber 48. Holes 52 may, for example, allow for approximately less than or equal to 5%, 10%, 15%, 20%, 25%, 30%, or more of the total amount of diluent 40 along flow path 42 to be transmitted into mixing chamber 48. In another embodiment, the holes 52 may, for example, allow for approximately between 1%-5%, 1%-10%, 5%-10%, 5%-10%, 10%-20%, 20%-30%, or more of the total amount of diluent 40 along flow path 42 to be transmitted into mixing chamber 48. The remainder of the diluent 40 may pass along fluid flow path 54 through one or more diluent passages 56 and into mixing chamber 58. In this manner, a split of diluent 40 between the mixing chamber 48 (a first chamber) and the mixing chamber 58 (a second chamber) may occur. In one embodiment, this split may cause a ratio of diluent between approximately 1:100 and 100:1, 1:50 to 1:20, or 1:25 to 1:10 enter the first chamber (e.g., mixing chamber 48) and the second chamber (e.g., mixing chamber 58).

Additionally, it should be noted that the diluent 40 that passes through holes 52 to mix with fluid flow 50 in the mixing chamber 48 creates a pre-mixed flow 60, which then passes through one or more passages 62 into mixing chamber 58. In one embodiment, the each of the diluent passages 56 and the passages 62 may be angled with respect to a central longitudinal axis or an axial direction 64 along the length of the nozzle 12. For example, diluent passages 56 may be angled 57 at between approximately 15-45 degrees, 20-40 degrees, or 30-36 degrees with respect to axial direction 64, or may be angled 57, for example, at approximately 30, 31, 32, 33, 34, 35, 36, 37, 38, 39, or 40 degrees with respect to axial direction 64. Similarly, passages 62 may be angled 59 at between approximately 10-40 degrees, 15-30 degrees, or 20-26 degrees with respect to axial direction 64, or may be angled 59, for example, at approximately 20, 21, 22, 23, 24, 25, 26, 27, 28, 29, or 30 degrees with respect to axial direction 64. Thus, mixing chamber 48 and mixing chamber 58 are in series and mixing chamber 48 operates to generate pre-mixed flow 60 that is supplied to mixing chamber 58. Moreover, the holes 52 impact the amount of diluent 40 that enters mixing chamber 48 and, thus, the amount of pre-mixing that occurs.

Additionally, a fuel flow 66 may pass through a central fuel chamber 68 defined by an annular wall 69. The fuel flow may pass through the central fuel chamber 68 to a plurality of fuel passages 70 located in an end wall 71 located cross-wise to axial direction 64. These fuel passages 70 allow the fuel flow 66 to pass into the mixing chamber 58. As with diluent passages 56 and passages 62 discussed above, fuel passages 70 may be angled 61 with respect to axial direction 64 along the length of the nozzle 12. For example, fuel passages 70 may be angled 61 at between approximately 20-80, 30-70 degrees, or 40-60 degrees with respect to axial direction 64, or may be angled 61, for example, at approximately 35, 40, 45, 50, 55, 60, 65, or 70 degrees with respect to axial direction 64. The angles 57, 59, and 61 described above may be useful in generating clockwise swirl 63 or counter clockwise swirl 65 in the mixing zone 58. That is, the angles 57, 59, and 61 may be selected as desired to produce one or more swirl 63 or 65 movements of the fluids mixing chambers as desired for a particular system. Indeed, each of angles 57, 59, and 61 may individually produce a swirl 63 or 65 and taken in conjunction, angles 57, 59, and 61 may produce an overall swirl 63 or 65.

The use of mixing chamber 48 to allow for pre-mixing of diluent 40 with one or more fluids to be combusted (e.g., fluid flow 50) may allow for more complete mixing than if diluent 40, for example, is merely introduced into mixing chamber 58. In this manner, multiple mixing zones (e.g., mixing chamber 48 and mixing chamber 58) may be utilized, whereby the mixing zones are staggered and sequential. This leads to stages of premixing which may, in turn, allow for a greater reduction in the flame temperature that exists when the fluids in the mixing chamber are combusted, which may also lead to lowered NOx emissions. Additionally, this pre-mixing may be useful when fuels with relatively high British Thermal Unit (BTU) values (e.g., fuels including hydrogen) are utilized in the turbine system 10.

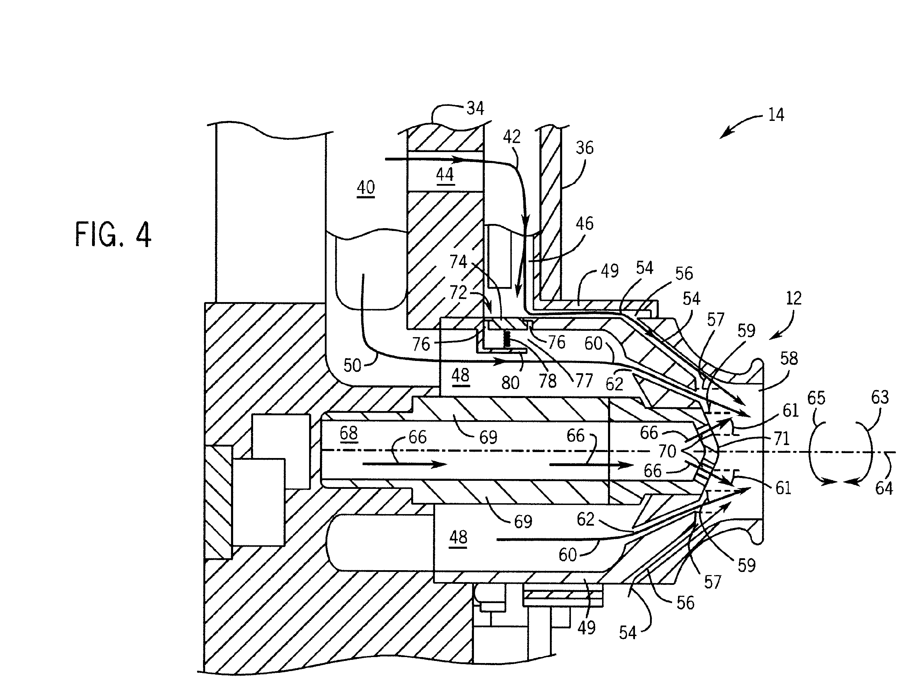

FIG 4. illustrates another embodiment for pre-mixing diluent 40 with one or more fluids to be combusted (e.g., fluid flow 50) in a turbine system 10. As illustrated in FIG. 4, a diluent 40 may pass along a fluid flow path 42 through an opening 44 in the cover ring 34 and into a radial plenum 46 of the nozzle 12, whereby the plenum 46 is defined by the cover ring 34 and the baffle plate 36. In one embodiment, the diluent 40 may be steam, nitrogen, or other fluids that may be pressurized. For example, the diluent 40 may be at a pressure of approximately 100-400, 150-300, or 200-250 pounds per square inch (psi) or another range. The diluent 40 may flow along fluid flow path 42 into the plenum 46. The diluent 40 may enter the mixing chamber 48, via an opening 72 between the plenum 46 and the mixing chamber 48 so that the diluent 40 may pre-mix with a fluid flow 50, which may include, for example, fuel, air, or a fuel-air mixture.

The opening 72 between the plenum 46 and the mixing chamber 48 may be selectively blocked by a stopper 74 that may include one or more sealing elements 76. The sealing elements 76 may be attached to the plenum 46 and/or the stopper 74, and may operate to block diluent 40 from entering the mixing chamber 48. Additionally, a resistive element 78 may be attached to a support member 80 and/or the stopper 74. In one embodiment, the resistive element 78 may be a spring. The resistive element 78 may provide a force that keeps the sealing elements 76 in contact with both the plenum 46 and the stopper 72 to fluidly seal the plenum 46 from the mixing chamber 48. In certain embodiments, the stopper 74 and resistive element 78 may collectively define a check valve or one-way valve 77, which opens in response to fluid pressure in the plenum 46.

In operation, the pressure of the diluent 40 may be adjusted such that the diluent 40 may provide a force on the stopper 74 to move the stopper 74 away from plenum 46, thus causing the sealing elements 76 to lose their fluid seal. That is, force exerted on the stopper 74 by the diluent 40 may overcome the resistance force of the resistive element 78, so that the stopper 78 moves into the mixing chamber 48, thus allowing a portion of the diluent 40 to flow into the mixing chamber 48. Moreover, the distance that the stopper 74 moves into the mixing chamber 48 may be directly related to the pressure of the diluent 40. That is, the higher the pressure of the diluent 40, the more the force that the diluent 40 may exert on the stopper 74, which causes the stopper 74 to move a greater distance from the plenum 46. Moreover, the greater the distance that the stopper 74 moves from the plenum 46, the greater amount of diluent may pass into the mixing chamber 48. For example, by varying the pressure diluent 40 in the plenum 46, approximately 1%, 2%, 3%, 4%, 5%, 6%, 7%, 8%, 9%, 10%, or more of the total amount of diluent 40 along flow path 42 to be transmitted into mixing chamber 48. In another embodiment, by varying the pressure diluent 40 in the plenum 46, approximately less than or equal to 5%, 10%, 15%, 20%, 25%, 30%, or more of the total amount of diluent 40 along flow path 42 may be transmitted into mixing chamber 48. In another embodiment, by varying the pressure diluent 40 in the plenum 46, approximately between 1%-5%, 1%-10%, 5%-10%, 5%-10%, 10%-20%, 20%-30%, or more of the total amount of diluent 40 along flow path 42 may be transmitted into mixing chamber 48.

In this manner, pre-mixing of diluent 40 with one or more fluids to be combusted (e.g., fluid flow 50) may occur in the mixing chamber 48 such to allow complete mixing of the diluent 40 with fluids to be combusted. That is, through the use of mixing chamber 48 to allow for pre-mixing of diluent 40 with one or more fluids to be combusted (e.g., fluid flow 50), more complete mixing prior to ignition from the fuel nozzle 12 may occur. Accordingly, it may be advantageous to utilize multiple mixing zones (e.g., mixing chamber 48 and mixing chamber 58), whereby the mixing zones are staggered and sequential. By orienting mixing chamber 48 and mixing chamber 58 in series, mixing chamber 48 operates to generate pre-mixed flow 60 that is supplied to mixing chamber 58. Additionally, through the use of the stopper 74, the amount of diluent 40 that enters mixing chamber 48 is impacted and, thus, the amount of pre-mixing that occurs in the mixing chamber 48 is impacted. Thus, through the use of the stopper 74, premixing in the first stage (e.g., in mixing chamber 48) as well as mixing in the second stage (e.g., in mixing chamber 58) may be adjusted and controlled by varying the split in diluent 40 transmitted to each of mixing chamber 48 and mixing chamber 58.

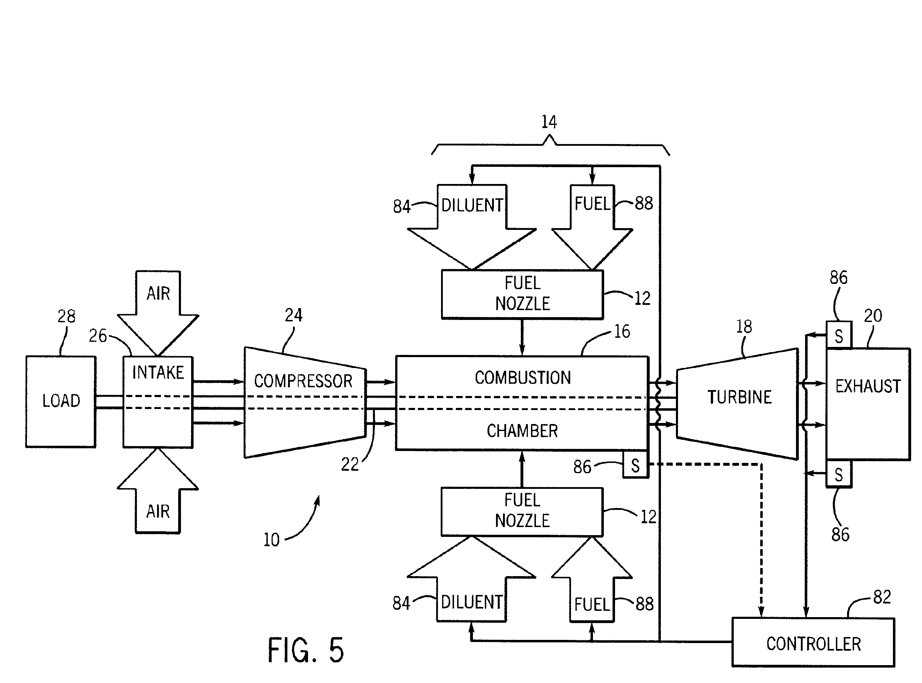

FIG. 5 illustrates a system that allows for active control of the amount of diluent 40 that enters mixing chamber 48. FIG. 5 illustrates an embodiment of the turbine system 10 that may include one or more controllers 82, which may be an electric or electronic device for controlling fluid flow of diluent 40 to the fuel nozzles 12. In the present embodiment, the controller 82 may be communicatively coupled to each of a diluent source 84 and at least one sensor 86. In one embodiment, each of the sensors 86 may be positioned adjacent to or inside of the exhaust 20. However, additional sensors 86 may be located in other portions of the turbine system 10. For example, one or more sensors 86 may be positioned in or adjacent to the combustion chamber 16 or in another portion of the combustor 14.

In one embodiment, the sensor 86 may be a fluid sensor that may obtain feedback indicative of, for example, emission levels in the exhaust 20. For example, the sensor 86 may measure NOx levels, CO levels, or other levels of gases in the emissions generated during a combustion process of the turbine system 10. Moreover, the sensor 86 may include any suitable sensor for obtaining feedback indicative of combustion dynamics. For example, the sensor 86 may include a temperature sensor, a flame sensor, or another type of sensor. The controller 82 may receive information from the sensor 86 relating to, for example, the characteristics of the fluids passing through the exhaust 20 and/or of fluids flowing through the combustor 14.

Based on this information received from the sensor 86, the controller 82 may adjust the diluent source 84 to alter aspects of the diluent 40 provided to the fuel nozzles 12. In one embodiment, the controller 82 may transmit a signal that is received by the diluent source 84, which may cause the diluent source 84 to change a pressure, a flow rate, a diluent type, a diluent composition, another characteristic, or a combination thereof for the diluent 40. For example, a sensor 86 may measure the amount of a fluid (e.g., NOx) in the emissions of the exhaust 20 and may transmit a signal indicative of that level to the controller 82. The controller 82 may receive this signal and determine if the detected fluid (e.g., NOx) in the emissions of the exhaust 20 is at too great of a level, for example, above a particular threshold (e.g., a pollutant emissions threshold). If it is determined that the detected (e.g., measured) fluid is above a threshold, then the controller 82 may determine one or more changes to the diluent source 84 that would alter the characteristics of diluent 40 transmitted to the fuel nozzle and, thus, alter the combustion characteristics in the combustor 14 and the exhaust 20 generated therefrom. One such change might be to cause the amount of diluent 40 transmitted to the nozzles 12 to be increased. For example, as discussed above with respect to FIG. 3, diluent 40 may pass through one or more holes 52 located between the plenum 46 and mixing chamber 48. Thus, by increasing the amount of diluent 40 present, the amount of diluent 40 passing through holes 52 and into mixing chamber 48 may also be increased.

Additionally or alternatively, as the controller 82 determines that the signal received from the sensor 86 indicates that the detected (e.g., measured) fluid is above a threshold, the controller 82 may generate and transmit a signal to the diluent source 84 to change, for example, the pressure of the diluent 40 supplied to the nozzles 12. For example, as discussed above with respect to FIG. 4, diluent 40 may pass through an opening 72 between the plenum 46 and the mixing chamber 48 of the nozzles 12. Moreover, the amount of diluent 40 that may pass through the opening 72 may be governed by the distance that a stopper 74 moves from the opening 72 into the mixing chamber 48. As previously described with respect to FIG. 4, as the pressure of the diluent 40 increases, the force that the diluent exerts on the stopper 74 also increases, causing the stopper 74 to move a greater distance into the mixing chamber 48 and, thus, allowing a greater amount of diluent 40 to pass into the mixing chamber 48. Thus, the controller 82 may operate to monitor and control aspects of the functionality of the turbine system 10, for example, to actively control the emissions of the turbine system 10 through manipulation of diluent 40 supplied to the turbine system 10.

Additionally, it is envisioned that in some embodiments, the controller 82 may operate to control an amount of fuel transmitted by a fuel source 88. For example, based on information received from the sensor 86, the controller 82 may adjust the fuel source 88 to alter aspects (amount, pressure, etc.) of the fuel provided to the fuel nozzles 12. In this manner, the overall fuel and diluent 40 ratio for the turbine system 10 may be monitored and altered as desired.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a controller configured to:
      receive a signal indicative of an emissions level of turbine; and
      generate at least one control signal configured control a split of diluent between the first and the second mixing chamber of the fuel nozzle in the turbine).
2. The system of clause 1, wherein the controller controls the split of the second fluid by altering an amount or a pressure of the second fluid provided to the fuel nozzle in the turbine.
3. The system of clause 1, wherein the first mixing chamber and second mixing chamber are coupled in series.
4. The system of any of clauses 1 to 3, comprising a sensor configured to generate the signal indicitive of the emissions level of the turbine.
5. The system of claim 4, wherein the sensor is configured measure at least one attribute of a fluid in an exhaust portion of the turbine to generate the signal indicitive of the emissions level of the turbine.
6. The system of clause 4, wherein the sensor is configured measure at least one attribute of a fluid in a combustion chamber of the turbine to generate the signal indicitive of the emissions level of the turbine.
7. A system comprising:
   a fuel nozzle, comprising:
      a first mixing chamber configured to receive a fuel, a diluent, and a fluid mixture comprising diluent;
      a fuel passage fluidly coupled to the first mixing chamber, wherein the fuel passage is configured to supply the fuel to the first mixing chamber;
      a second mixing chamber fluidly coupled to the first mixing chamber, wherein the second mixing chamber is configured to receive the fluid mixture from the first mixing chamber; and
      a plenum fluidly coupled to both the first mixing chamber and the second mixing chamber, wherein the plenum is configured to split the diluent into a first diluent flow into the first mixing chamber and a second diluent flow into the second mixing chamber.
8. The system of clause 7, comprising a passage fluidly coupled between the plenum and the second mixing chamber, wherein the passage is oriented at an angle of approximately 30-36 degrees with respect to a longitudinal axis of the fuel nozzle.
9. The system of clause 7 or 8, comprising a passage fluidly coupled between the first mixing chamber and the second mixing chamber, wherein the passage is oriented at an angle of approximately 20-26 degrees with respect to a longitudinal axis of the fuel nozzle.
10. The system of any of clause 7 to 9, comprising a passage fluidly coupled between the fuel chamber and the second mixing chamber, wherein the passage is oriented at an angle of approximately 40-60 degrees with respect to a longitudinal axis of the fuel nozzle.
11. The system of any of clause 7 to 10, comprising a movable stopper configured to selectively adjust an amount of flow through the plenum into the second mixing chamber to adjust the split of the diluent into the first diluent flow and the second diluent flow into the second mixing chamber.

## Claims

1. A system (10) comprising:
a fuel nozzle (12), comprising:
a first mixing chamber (48) comprising at least one first opening (52);
a second mixing chamber (58) comprising at least one second opening (62);
a first path configured to supply a first fluid (50) into the first mixing chamber (48);
a second path (42) configured to supply a second fluid (40) into the first mixing chamber (48) via the at least one first opening (52);
a third path (62) configured to supply a mixture (60) of the first fluid (50) and the second fluid (40) from the first mixing chamber (48) to the second mixing chamber (58) via the at least one second opening; and
a fourth path (54) configured to supply the second fluid (40) to the second mixing chamber (58).

2. The system of claim 1, wherein the first fluid (50) comprises fuel, air, or a fuel-air mixture.

3. The system of claim 1 or 2, wherein the second fluid (40) comprises a diluent.

4. The system of claim 1, 2 or 3, wherein the at least one first opening (52) is configured to inject less than or equal to approximately 30% of the second fluid (40) into the first mixing chamber (48).

5. The system of any of claims 1 to 4, wherein the at least one second opening (62) is configured to inject the mixture into the second mixing chamber (58) at an angle of approximately 10 to 40 degrees with respect to a longitudinal axis of the fuel nozzle (12).

6. The system of any preceding claim, wherein the third and fourth paths (62,54) are connected to one another, and the fuel nozzle (12) is configured to split the second fluid (40) between the first and second mixing chambers (48,58).

7. The system of any preceding claim, wherein the fourth path (54) is configured to inject the second fluid (40) through at least one third opening into the second mixing chamber (58) at an angle of approximately 20 to 40 degrees with respect to a longitudinal axis of the fuel nozzle (12).

8. The system of any preceding claim, comprising a movable stopper (74) configured to selectively adjust an amount of flow through the at least one first opening (44).

9. The system of any preceding claim, comprising a combustor (14), a turbine (18), or a combination thereof having the nozzle (12).

10. The system of any preceding claim, further comprising:
a controller (82) configured to:
receive a signal indicative of an emissions level of turbine; and
generate at least one control signal configured control a split of the second fluid between the first (48) and the second mixing chamber (58) of the fuel nozzle (12) in the turbine (18).

11. The system of claim 10, wherein the controller (82) controls the split of the second fluid by altering an amount or a pressure of the second fluid provided to the fuel nozzle (12) in the turbine (18).

12. The system of claim 10, wherein the first mixing chamber (48) and second mixing chamber (56) are coupled in series.

13. The system of any of claims 9 to 12, comprising a sensor (86) configured to generate the signal indicitive of the emissions level of the turbine (18).

14. The system of claim 13, wherein the sensor (86) is configured to measure at least one attribute of a fluid in an exhaust portion (20) of the turbine (18) to generate the signal indicitive of the emissions level of the turbine (18).

15. The system of claim 13, wherein the sensor (86) is configured to measure at least one attribute of a fluid in a combustion chamber (16) of the turbine (18) to generate the signal indicitive of the emissions level of the turbine (18).
